# EUROPEAN PATENT APPLICATION

(11) **EP 4 831 851 A1**
(43) Date of publication of application: **28.10.2026**
(21) Application number: 26158138.3
(22) Date of filing: 12.02.2026
(51) Int. Cl.: G06F 21/57, G06F 40/30

(54) **VULNERABILITY INFLUENCE EVALUATION SYSTEM AND VULNERABILITY INFLUENCE EVALUATION METHOD**

(30) Priority: 25.04.2025 JP 2025072940
(71) Applicant: Hitachi, Ltd., Tokyo 100-8280 (JP)
(72) Inventor: SUGIMOTO, Akihiro, Tokyo, 100-8280 (JP); YAMASHITA, Fumiki, Tokyo, 100-8280 (JP); KASUYA, Momoka, Tokyo, 100-8280 (JP); MORITA, Nobuyoshi, Tokyo, 100-8280 (JP)
(74) Representative: MERH-IP Matias Erny Reichl Hoffmann Patentanwälte PartG mbB

(57) **Abstract**

A vulnerability influence evaluation system: extracts influence components indicated by the reference information from the investigation report from an investigation report for an existing software configuration, reference information indicating a component related to vulnerability influence evaluation and a type of the component, and a condition generation rule and a component label based on the type; add a label including the type indicated by the reference information to the extracted components; when the label added to the extracted components satisfies the determination condition generation rule and the added label includes the component label, generate a vulnerability determination condition indicating a component corresponding to the component label included in the added label; and perform the vulnerability influence evaluation on the software configuration to be evaluated based on the vulnerability determination condition.

## Description

### CLAIM OF PRIORITY

The present application claims priority from Japanese patent application JP 2025-072940 filed on April 25, 2025, the content of which is hereby incorporated by reference into this application.

### BACKGROUND OF THE INVENTION

the present invention relates to a vulnerability influence evaluation system and a vulnerability influence evaluation method.

As a background art of the present technical field, JP 7470856 B2 is published. This publication describes that "An information processing apparatus includes: a storage unit that stores dictionary information associating a specific name of software with a reference name indicating the same software as software having the specific name; an acquisition unit that acquires a reference name of target software; and a control unit that refers to the dictionary information to identify not only the specific name of the target software corresponding to the reference name of the target software but also a first identifier of the target software corresponding to the identified specific name of the target software, in which the storage unit stores a vulnerability database that stores the first identifier of the software and vulnerability information in association with each other, and the control unit identifies the vulnerability information on the target software from the vulnerability database using the first identifier of the target software as a search key." (see Abstract).

### SUMMARY OF THE INVENTION

Although the technique described in JP 7470856 B2 identifies the vulnerability of the target software by collating the target software with the vulnerability database while eliminating notation fluctuation of the name of the software, the method described in JP 7470856 B2 has room for improvement in influence evaluation of the vulnerability on a software configuration (e.g., a product) including the software having the vulnerability.

For example, even when a software configuration includes software for which vulnerability is indicated, the vulnerability may not affect the software configuration when a specific condition is satisfied (e.g., the software in which the vulnerability is indicated does not call a function including the vulnerability on an implementation code in the software configuration). As described above, the influence of the vulnerability of the software on the software configuration may vary depending on a situation of the software configuration.

Thus, an aspect of the present invention performs vulnerability influence evaluation on a software configuration with high accuracy.

The aspect of the present invention adopts the following structures. A vulnerability influence evaluation system comprises: a processor; and a memory, the memory is configured to hold: an investigation report indicating a result of vulnerability influence evaluation on an existing software configuration including one or more pieces of software; reference information indicating an influence component indicating a word related to vulnerability influence evaluation and a type of the influence component; determination condition generation rule information indicating a determination condition generation rule based on the type and an influence component label; and software configuration information indicating a software configuration to be evaluated that includes one or more pieces of software, and the processor is configured to: extract influence components indicated by the reference information from the investigation report; add a label to corresponding one of the extracted influence components, the label including the type corresponding to the corresponding one of the extracted influence components in the reference information; generate a vulnerability determination condition indicating an influence component corresponding to the influence component label among the extracted influence components when the label added to the corresponding one of the extracted influence components satisfies the determination condition generation rule and the added label includes the influence component label; and perform the vulnerability influence evaluation on the software configuration to be evaluated based on the vulnerability determination condition.

The aspect of the present invention can perform vulnerability influence evaluation on a software configuration with high accuracy.

Problems, configurations, and effects which are not mentioned above are explained in the following embodiments.

### BRIEF DESCRIPTIONS OF DRAWINGS

The present invention can be appreciated by the description which follows in conjunction with the following figures, wherein:
Fig. 1 is a block diagram illustrating a functional configuration example of a vulnerability influence evaluation system according to the first embodiment;
Fig. 2 is a block diagram illustrating a hardware configuration example of an information processing apparatus according to the first embodiment;
Fig. 3 is a diagram illustrating a data configuration example of a vulnerability information table according to the first embodiment;
Fig. 4 is a diagram illustrating a data configuration example of a software configuration information table according to the first embodiment;
Fig. 5 is a diagram illustrating a data configuration example of a vulnerability investigation report information table according to the first embodiment;
Fig. 6 is a diagram illustrating a data configuration example of an annotation information table according to the first embodiment;
Fig. 7 is a diagram illustrating a data configuration example of an influence component table according to the first embodiment;
Fig. 8 is a diagram illustrating a data configuration example of a determination condition generation rule information table according to the first embodiment;
Fig. 9 is a diagram illustrating a data configuration example of a vulnerability determination condition table according to the first embodiment;
Fig. 10 is a diagram illustrating a data configuration example of a vulnerability influence evaluation table according to the first embodiment;
Fig. 11 is a flowchart illustrating an example of vulnerability investigation report registration processing according to the first embodiment;
Fig. 12 is a flowchart illustrating an example of influence component extraction processing according to the first embodiment;
Fig. 13 is a flowchart illustrating an example of vulnerability determination condition generation processing according to the first embodiment;
Fig. 14 is a flowchart illustrating an example of vulnerability influence evaluation processing according to the first embodiment; and
Fig. 15 is a diagram illustrating a screen configuration example of a vulnerability influence evaluation screen according to the first embodiment.

### DESCRIPTION OF THE PREFERRED EMBODIMENTS

In the following, embodiments of the present invention are explained referring the attached drawings. In the embodiments, the same configuration has the same reference letter. The embodiments are examples to achieve the present invention and do not limit a technical range of the present invention.

### [First embodiment]

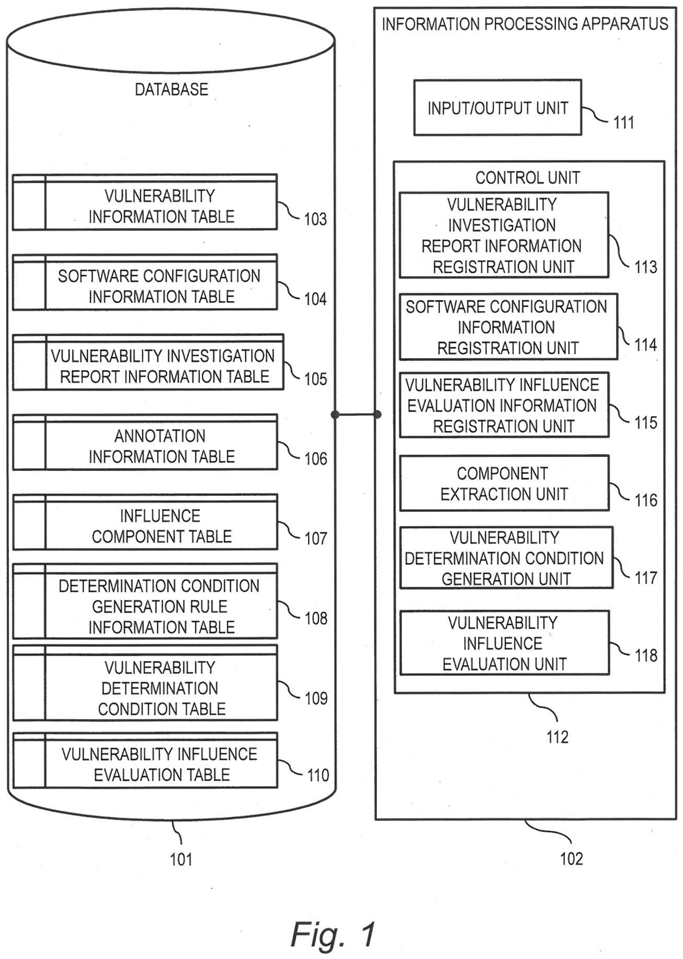

Fig. 1 is a block diagram illustrating a functional configuration example of a vulnerability influence evaluation system. The vulnerability influence evaluation system includes a database 101 and a database 101 connected to an information processing apparatus 102, for example. The database 101 is an external storage device connected to the information processing apparatus 102, for example.

The database 101 holds a vulnerability information table 103, a software configuration information table 104, a vulnerability investigation report information table 105, an annotation information table 106, an influence component table 107, a determination condition generation rule information table 108, a vulnerability determination condition table 109, and a vulnerability influence evaluation table 110.

The vulnerability information table 103 holds information on vulnerability of software. The vulnerability information table 103 may include information obtained from a database regarding known vulnerabilities such as the national vulnerability database (NVD), for example.

The software configuration information table 104 holds information on a software configuration of a product. The software configuration indicates a software group including one or more pieces of software constituting a certain version of a product. For example, one combination of a version and a product corresponds to one software configuration. The software configuration information table 104 defines a dependency (reference) relationship between a software group included in each of products of each of versions and software included in the software group included in the product of the version, for example.

The vulnerability investigation report information table 105 holds information on investigation reports concerning vulnerability influence evaluations performed in the past on existing software configurations. The vulnerability investigation report information table 105 also may store an unaddressed reason for an investigation report having obtained an investigation result indicating that the software configuration is not affected by the vulnerability. The unaddressed reason indicates a reason why the vulnerability to be investigated does not need to be addressed for the existing software configuration to be investigated (that is, a reason why an adverse effect due to the vulnerability does not occur).

The annotation information table 106 (an example of reference information) holds information on a word to be extracted from the unaddressed reason for the investigation report and an annotation (component type) to be added to the word having been extracted. The annotation information table 106 indicates the word to be extracted, the word being extracted as an influence component. The annotation information table 106 indicates the word to be extracted, that is, the influence component, which is related to the vulnerability influence evaluation. The component type indicates an attribute of the word to be extracted in the vulnerability influence evaluation.

The annotation information table 106 is information registered in advance using a list of software names included in a product indicated by given product information, and a countermeasure based on security knowledge or the like, for example. Examples of the security knowledge include vulnerability exploitability exchange (VEX). The VEX focuses on which software calls a code part including vulnerability in software, so that an annotation may be registered using a function name, a predicate related to a function call relationship, or the like to use the VEX as the security knowledge.

The influence component table 107 indicates an influence component that is a word extracted from the investigation report using the annotation information table 106.

The determination condition generation rule information table 108 holds a determination condition generation rule for generating a vulnerability determination condition used for the vulnerability influence evaluation. The vulnerability determination condition table 109 holds the vulnerability determination condition. The vulnerability influence evaluation table 110 holds a result of the vulnerability influence evaluation using the vulnerability determination condition.

The information processing apparatus 102 includes an input/output unit 111 and a control unit 112 that are each a functional unit, for example. The input/output unit 111 receives input of information and the like used by the control unit 112 through an input device 205 and the like to be described later, and outputs a result of processing performed by the control unit 112 and the like to an output device 206 and the like to be described later.

The control unit 112 controls various types of processing performed by the information processing apparatus 102. The control unit 112 includes a vulnerability investigation report information registration unit 113, a software configuration information registration unit 114, a vulnerability influence evaluation information registration unit 115, a component extraction unit 116, a vulnerability determination condition generation unit 117, and a vulnerability influence evaluation unit 118, which are each a functional unit, for example.

The vulnerability investigation report information registration unit 113 registers information in the vulnerability investigation report information table 105. The software configuration information registration unit 114 registers information in the software configuration information table 104. The vulnerability influence evaluation information registration unit 115 registers information in the vulnerability influence evaluation table 110. The component extraction unit 116 performs influence component extraction processing to be described later. The vulnerability determination condition generation unit 117 performs vulnerability determination condition generation processing to be described later. The vulnerability influence evaluation unit 118 evaluates influence of vulnerability to be evaluated on a software configuration to be evaluated.

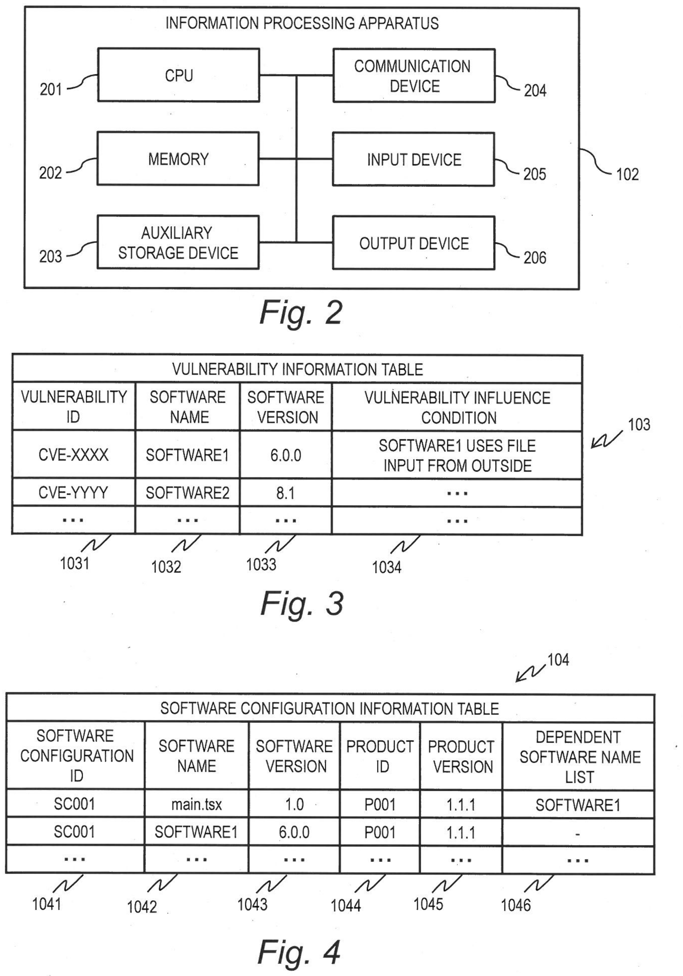

Fig. 2 is a block diagram illustrating a hardware configuration example of the information processing apparatus 102. The information processing apparatus 102 is composed of a computer including a central processing unit (CPU) 201, a memory 202, an auxiliary storage device 203, a communication device 204, an input device 205, and an output device 206, for example.

The CPU 201 is an example of a processor, and executes a program stored in the memory 202. The memory 202 includes a read only memory (ROM) that is a nonvolatile storage element and a random access memory (RAM) that is a volatile storage element. The ROM stores an invariable program (e.g., basic input/output system (BIOS)) and the like. The RAM is a high-speed and volatile storage element such as a dynamic random access memory (DRAM), and temporarily stores a program executed by the CPU 201 and data used when the program is executed.

The auxiliary storage device 203 is a large-capacity and nonvolatile storage device such as a magnetic storage device (hard disk drive (HDD)) or a flash memory (solid state drive (SSD)), for example, and stores a program executed by the CPU 201 and data used when the program is executed. That is, the program is read from the auxiliary storage device 203, loaded into the memory 202, and executed by the CPU 201.

The communication device 204 is a network interface device that controls communication with other devices according to a predetermined protocol. The communication device 204 also includes a serial interface such as a universal serial bus (USB), for example.

The input device 205 is a device that receives an input from an operator, such as a keyboard or a mouse. The output device 206 is a device that outputs an execution result of the program in a format that can be visually recognized by the operator, such as a display device or a printer.

The CPU 201 executes the program that may be partially or entirely provided from a removable medium (CD-ROM, flash memory, etc.) that is a non-transitory storage medium or an external computer including a non-transitory storage device to the information processing device 102 through a network, and that may be stored in the auxiliary storage device 203 that is non-volatile and a non-transitory storage medium. Thus, the information processing apparatus 102 preferably includes an interface for reading data from a removable medium.

The information processing apparatus 102 is a computer system configured on physically one computer or on a plurality of computers configured logically or physically, and may operate on separate threads on the same computer or may operate on a virtual computer constructed on a plurality of physical computer resources.

The CPU 201 includes the above-described functional units provided in the information processing apparatus 102, for example. For example, the CPU 201 functions as the input/output unit 111 by operating according to an input/output program loaded in the memory 202, and functions as the control unit 112 by operating according to a control program loaded in the memory 202. Each functional unit provided in the control unit 112 has a similar relationship with a program.

The functional units provided in the information processing apparatus 102 have functions that may be implemented by dedicated hardware such as an application specific integrated circuit (ASIC) or a field-programmable gate array (FPGA), for example.

Various types of information stored in the database 101 may be partially or entirely stored in the memory 202 and/or the auxiliary storage device 203. The vulnerability influence evaluation system in the present embodiment uses information that may be expressed by any data structure without depending on data structure. For example, a data structure appropriately selected from among a table, a list, a database, and a queue may store the information.

Fig. 3 is a diagram illustrating a data configuration example of the vulnerability information table 103. The vulnerability information table 103 includes a vulnerability ID column 1031, a software name column 1032, a software version column 1033, and a vulnerability influence condition column 1034, for example. The vulnerability ID column 1031 indicates a vulnerability ID for identifying vulnerability. The software name column 1032 and the software version column 1033 indicate a name of software related to the vulnerability (e.g., software having the vulnerability) indicated by the vulnerability ID and a version of the software, respectively.

The vulnerability influence condition column 1034 indicates a vulnerability influence condition for the software to be affected by the vulnerability indicated by the vulnerability ID. The vulnerability influence condition field 1034 indicates the vulnerability influence condition that is described in a natural language, for example. Besides the condition illustrated in the example of Fig. 3, examples of the vulnerability influence condition include a condition in which "any code is executed when any file name is given to software with vulnerability from the outside".

Fig. 4 is a diagram illustrating a data configuration example of the software configuration information table 104. The software configuration information table 104 includes a software configuration ID column 1041, a software name column 1042, a software version column 1043, a product ID column 1044, a product version column 1045, and a dependent software name list column 1046, for example.

The software configuration ID column 1041 indicates a software configuration ID for identifying a software configuration. The software name column 1042 and the software version column 1043 indicate a name and a version of software included in a software configuration, respectively.

The product ID column 1044 and the product version column 1045 indicate a product ID for identifying a product including the software configuration and a version of the product, respectively. The dependent software name list column 1046 indicates a list of other software on which the software of the version indicated in the software version column 1043 and the software name column 1042 depends (refers) in the software configuration indicated in the software configuration ID column 1041.

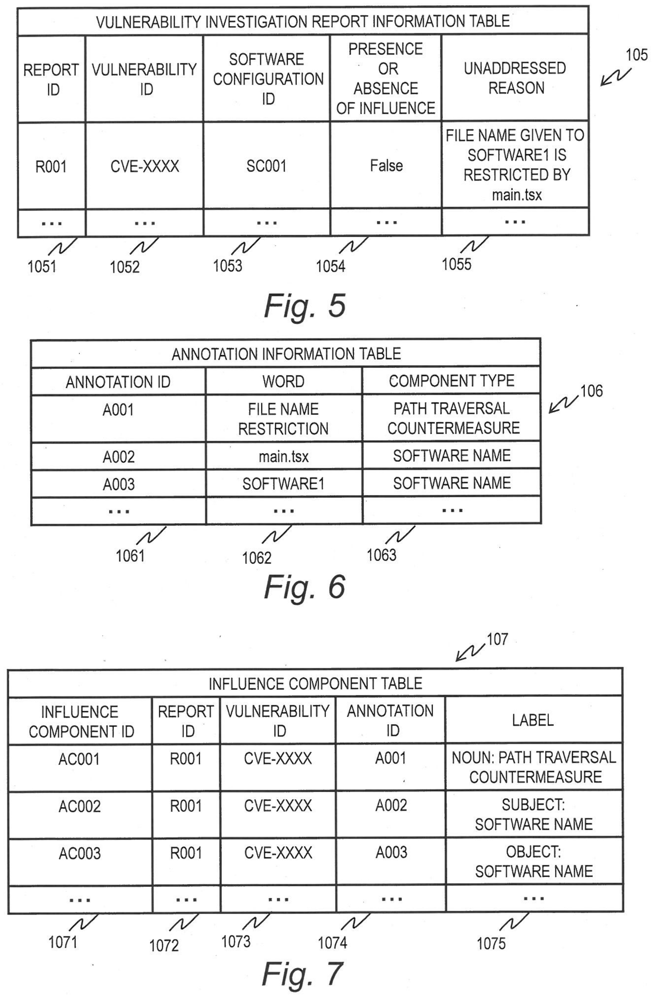

Fig. 5 is a diagram illustrating a data configuration example of the vulnerability investigation report information table 105. The vulnerability investigation report information table 105 includes a report ID column 1051, a vulnerability ID column 1052, a software configuration ID column 1053, an influence presence/absence column 1054, and an unaddressed reason column 1055, for example.

The report ID column 1051 indicates a report ID for identifying a vulnerability investigation report. The vulnerability ID column 1052 indicates a vulnerability ID of vulnerability to be investigated in the vulnerability investigation report. The software configuration ID column 1053 indicates a software configuration ID of a software configuration to be investigated in the vulnerability investigation report.

The influence presence/absence column 1054 indicates an investigation result indicated in the vulnerability investigation report as to whether the vulnerability to be investigated affects a product of a version corresponding to the software configuration to be investigated (e.g., "True" when an investigation result is obtained in which the vulnerability affects the product of the version, or "False" when an investigation result is obtained in which the vulnerability does not affect the product of the version).

The unaddressed reason column 1055 indicates an unaddressed reason. The unaddressed reason column 1055 stores an unaddressed reason only when a value in the influence presence/absence column 1054 indicates that an investigation result is obtained in which the vulnerability to be investigated does not affect the software configuration (a product of a version corresponding thereto). The unaddressed reason column 1055 indicates an unaddressed reason that is described in natural language.

For example, when a vulnerability influence condition that "SOFTWARE 1 uses an externally input file" is satisfied in the example of the vulnerability information table 103 shown in Fig. 3, the unaddressed reason column 1055 indicates that "SOFTWARE 1" will be adversely affected by vulnerability of "CVE-XXXX".

The vulnerability information table 103 may include an unaddressed reason or the like regarding a dependency relationship between software for which vulnerability is indicated and other software. For example, even when a software configuration to be evaluated in vulnerability influence evaluation processing to be described later includes the software indicated by the vulnerability information table 103, the software configuration having the dependency relationship indicated by the unaddressed reason is considered to have no influence caused by vulnerability corresponding to the unaddressed reason of the software. Defining an unaddressed reason regarding a dependency relationship between pieces of software allows a determination result to be more likely to be obtained, the determination result indicating no influence caused by vulnerability as described above in the vulnerability influence evaluation processing to be described later.

Meanwhile, although the example of the software configuration information table 104 in Fig. 4 shows "SC001" including "SOFTWARE1" in which the vulnerability of "CVE-XXXX" is mentioned, the example of the vulnerability investigation report information table 105 in Fig. 5 indicates that "main.tsx restricts a file name given to SOFTWARE1", and thus the vulnerability of "CVE-XXXX" does not need to be addressed for "SC001" including "SOFTWARE1" (no adverse effect due to the vulnerability occurs).

Fig. 6 is a diagram illustrating a data configuration example of the annotation information table 106. The annotation information table 106 includes an annotation ID column 1061, a word column 1062, and a component type column 1063, for example.

The annotation ID column 1061 indicates an annotation ID for identifying an annotation. The word column 1062 indicates an annotation target of a word (that is, a word to be extracted as an influence component). The annotation target indicated in the word column 1062 may be one word, or may be one or more phrases, or one or more sentences, including a plurality of words.

The component type column 1063 indicates a type of a component defined for a word to be annotated (information added to the word to be annotated). The annotation information table 106 desirably defines at least an annotation that is a component type indicating information for identifying software (an example of a first type, and a "software name" in the example of Fig. 6).

Fig. 7 is a diagram illustrating a data configuration example of the influence component table 107. The influence component table 107 includes an influence component ID column 1071, a report ID column 1072, a vulnerability ID column 1073, an annotation ID column 1074, and a label column 1075, for example.

The influence component ID column 1071 indicates an influence component ID for identifying an influence component to be described later, the influence component being extracted from the vulnerability investigation report. The influence component indicates a component related to determination of an influence on a product, the influence being caused by a specific vulnerability.

The report ID column 1072 indicates a report ID of a vulnerability investigation report including an unaddressed reason including the influence component. The vulnerability ID column 1073 indicates a vulnerability ID corresponding to the unaddressed reason including the influence component in the vulnerability investigation report. The annotation ID column 1074 indicates an annotation ID corresponding to a word indicating the influence component.

The label column 1075 indicates a label assigned to the extracted influence component. The label is defined using a component type and a part of speech of the component type or a component (subject, object, etc.) of a sentence including the component type, such as "noun: path traversal countermeasure".

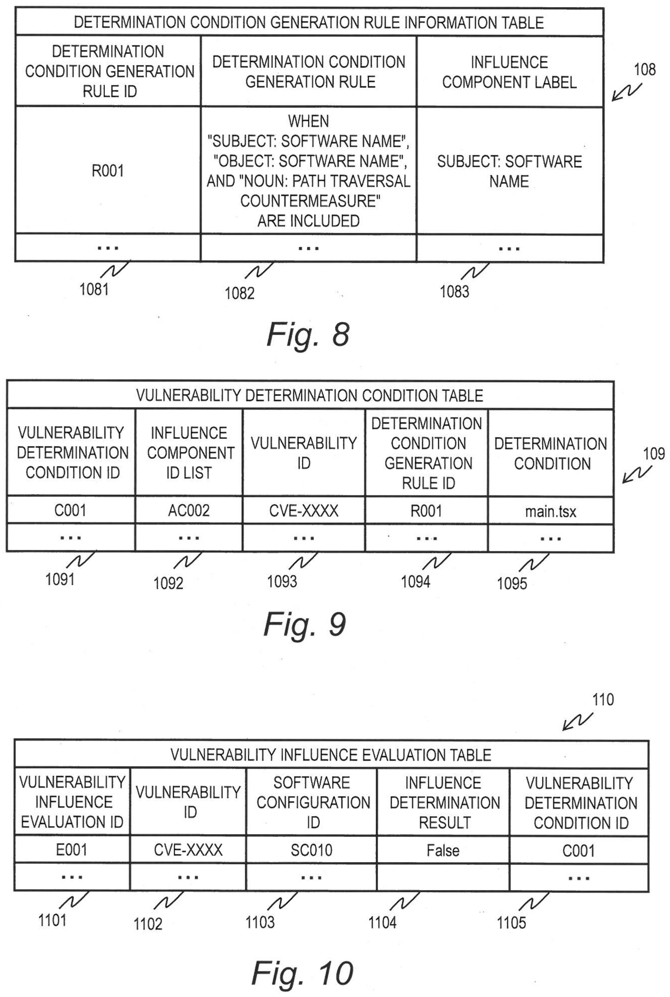

Fig. 8 is a diagram illustrating a data configuration example of the determination condition generation rule information table 108. The determination condition generation rule information table 108 includes a determination condition generation rule ID column 1081, a determination condition generation rule column 1082, and an influence component label column 1083, for example.

The determination condition generation rule ID column 1081 indicates a determination condition generation rule ID for identifying a determination condition generation rule for generating a vulnerability determination condition. The determination condition generation rule column 1082 indicates the determination condition generation rule. As in the example of Fig. 8, the determination condition generation rule is desirably defined using a combination of a component of a part of speech or a component of a sentence and a component type, similarly to a label added to an influence component.

The influence component label column 1083 indicates a label added to an influence component constituting a vulnerability determination condition generated based on the determination condition generation rule. The vulnerability determination condition table 109 desirably defines at least an influence component to which a label including information indicating software ("software name" in the example of Fig. 8) is added. The vulnerability determination condition table 109 may further define an influence component to which a label including information indicating a version (e.g., a version name) and/or information indicating a function (e.g., a function name) is added.

Fig. 9 is a diagram illustrating a data configuration example of the vulnerability determination condition table 109. The vulnerability determination condition table 109 includes a vulnerability determination condition ID column 1091, an influence component ID list column 1092, a vulnerability ID column 1093, a determination condition generation rule ID column 1094, and a determination condition column 1095, for example.

The vulnerability determination condition ID column 1091 indicates a vulnerability determination condition ID for identifying a vulnerability determination condition. The influence component ID list column 1092 indicates a list of IDs of influence components constituting the vulnerability determination condition. The vulnerability ID column 1093 indicates a vulnerability ID of vulnerability for which the corresponding vulnerability determination condition can be used for evaluation of the vulnerability. The determination condition generation rule ID column 1094 indicates a determination condition generation rule ID of a determination condition generation rule used for generating a vulnerability determination condition.

The determination condition column 1095 indicates a vulnerability determination condition. The vulnerability determination condition indicates software that determines influence of the vulnerability on a product in a software configuration, such as "main.tsx" illustrated in the example of Fig. 9, for example. That is, when the "main.tsx" changes in the software configuration, a result of influence evaluation of the vulnerability may change.

Fig. 10 is a diagram illustrating a data configuration example of the vulnerability influence evaluation table 110. The vulnerability influence evaluation table 110 includes a vulnerability influence evaluation ID column 1101, a vulnerability ID column 1102, a software configuration ID column 1103, an influence determination result column 1104, and a vulnerability determination condition ID column 1105, for example.

The vulnerability influence evaluation ID column 1101 indicates a vulnerability influence evaluation ID for identifying vulnerability influence evaluation. The vulnerability ID column 1102 indicates a vulnerability ID of vulnerability to be evaluated in the vulnerability influence evaluation. The software configuration ID column 1103 indicates a software configuration ID to be evaluated in the vulnerability influence evaluation.

The influence determination result column 1104 indicates a determination result as to whether vulnerability to be evaluated affects the software configuration ID to be evaluated in the vulnerability influence evaluation (e.g., "True" when an evaluation result is obtained in which the vulnerability affects the software configuration ID, and "False" when an evaluation result is obtained in which the vulnerability does not affect the software configuration ID) . The vulnerability determination condition ID column 1105 indicates a vulnerability determination condition ID of a vulnerability determination condition used in the vulnerability influence evaluation.

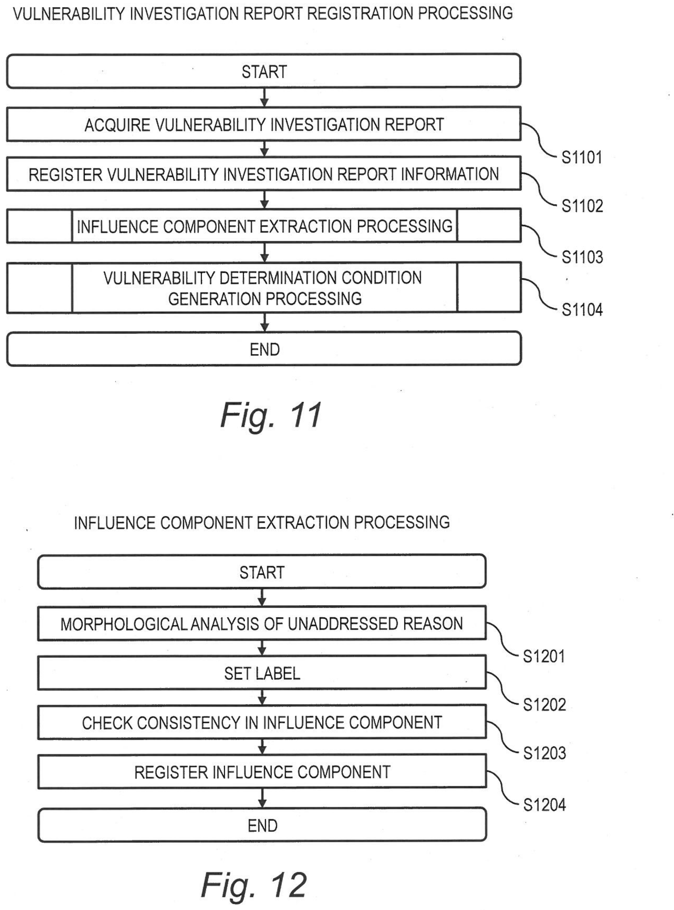

Fig. 11 is a flowchart illustrating an example of vulnerability investigation report registration processing. Before the vulnerability investigation report registration processing of Fig. 11 is started, information in the vulnerability information table 103 and the software configuration information table 104 is registered in advance. Then, information in the annotation information table 106 is registered in advance before processing in step S1103 described later is started. Subsequently, information in the determination condition generation rule information table 108 is registered in advance before processing in step S1104 described later is started.

The input/output unit 111 acquires information on a vulnerability investigation report, the information being input by a user through a graphical user interface (GUI) or the like (S1101), for example. The vulnerability investigation report information registration unit 113 registers the acquired information in the vulnerability investigation report information table 105 (S1102).

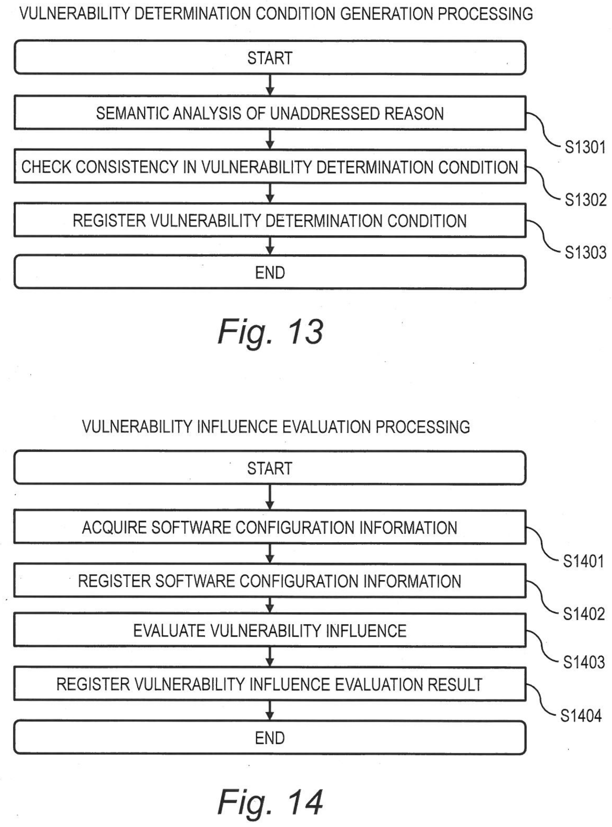

The component extraction unit 116 performs the influence component extraction processing (S1103). Details of the influence component extraction processing will be described later with reference to Fig. 12. The vulnerability determination condition generation unit 117 performs the vulnerability determination condition generation processing (S1104), and the vulnerability investigation report registration processing ends. Details of the vulnerability determination condition generation processing will be described later with reference to Fig. 13.

Fig. 12 is a flowchart illustrating an example of the influence component extraction processing. The component extraction unit 116 performs morphological analysis on an unaddressed reason included in the vulnerability investigation report information table 105 by using the annotation information table 106 as reference information, and extracts an influence component from a result of the morphological analysis (S1201).

The component extraction unit 116 uses the annotation information table 106 as a dictionary in the morphological analysis in step S1201. The component extraction unit 116 also extracts a word indicated in the annotation information table 106 as the influence component from the result of the morphological analysis.

The morphological analysis in step S1201 is an example of processing for extracting an influence component, and the component extraction unit 116 may extract the influence component by another method. For example, the component extraction unit 116 may extract the influence component using pattern matching or a neural network by using the annotation information table 106 as reference information. Alternatively, the component extraction unit 116 may give an unaddressed reason and the annotation information table 106 as reference information to a generative artificial intelligence (AI) that is an example of a language model, and then cause the generative AI to extract an influence component, for example.

The component extraction unit 116 sets a label corresponding to the extracted influence component (S1202). For example, the component extraction unit 116 combines a part of speech or a component of a sentence added to the extracted influence component as a result of the morphological analysis and a component corresponding to a word of the influence component in the annotation information table 106 to generate a label to be added to the influence component.

The component extraction unit 116 checks consistency related to the influence component (S1203). For example, the component extraction unit 116 specifies a software configuration ID corresponding to the unaddressed reason subjected to the morphological analysis in step S1201 (in the vulnerability investigation report information table 105) when a component type of the influence component extracted in step S1202 is the "software name". The component extraction unit 116 further checks whether the software indicated by the extracted influence component is included in the software configuration indicated by the specified software configuration ID by referring to the software configuration information table 104, for example.

Processing in step S1203 may be eliminated. When performing the processing in step S1203 and determining that the software indicated by the extracted influence component is not included in the software configuration indicated by the specified software configuration ID in the processing of step S1203, the component extraction unit 116 does not perform processing in step S1204 described later on the extracted influence component.

Using a machine learning method such as morphological analysis does not necessarily obtain a result with high accuracy due to a mistake in word division. Thus, the component extraction unit 116 checks whether the extracted influence component is actually included in the software configuration in step S1203, so that extraction accuracy can be expected to be improved.

The component extraction unit 116 registers information on the extracted influence component in the influence component table 107 (S1204), and ends the influence component extraction processing. In step S1204, the component extraction unit 116 issues an influence component ID, for example, and registers the influence component ID, a report ID and a vulnerability ID of an investigation report including an unaddressed reason that is an extraction source of the influence component, an annotation ID corresponding to a word indicating the influence component in the annotation information table 106, and the label set in step S1202, in the influence component table 107.

For example, the component extraction unit 116 may generate a determination condition generation rule indicating that all influence components extracted from one unaddressed reason are included, and store the determination condition generation rule in the determination condition generation rule information table 108. In this case, an influence component label corresponding to the determination condition generation rule is determined from the label of the influence component extracted from one unaddressed reason according to the input from the user, for example.

The component extraction unit 116 performs the processing in steps S1201 to S1204 for each unaddressed reason included in the vulnerability investigation report information table 105.

Hereinafter, a specific example of the processing in steps S1201 to S1203 will be described. The component extraction unit 116 performs the morphological analysis on the unaddressed reason "main.tsx restricts a file name given to SOFTWARE1" illustrated in the example of Fig. 5 using the annotation information table 106 as a dictionary, so that "main.tsx (subject)/ restricts (verb) /a file name (noun) given (modifier)/ to (particle)/ SOFTWARE 1 (object)" is obtained as a result of the morphological analysis in step S1201.

The component extraction unit 116 extracts a word to be annotated including a plurality of single words, such as "file name restriction", as a group of the plurality of single words (e.g., phrases) without dividing the word to be annotated into each single word in the morphological analysis, and then adds a part of speech or a component of a sentence.

In step S1201, the component extraction unit 116 extracts "main.tsx", "SOFTWARE 1", and "file name restriction", which are words included in the annotation information table 106, as influence components from the result of the morphological analysis.

In step S1202, the component extraction unit 116 sets labels for "main.tsx", "SOFTWARE 1", and "file name restriction", the labels being obtained by combining "subject", "object", and "noun", which are each a part of speech or a component of a sentence obtained as a result of the morphological analysis, and "software name", "software name", and "path traversal countermeasure", which are component types corresponding to the influence components in the annotation information table 106, with each other.

Consequently, the component extraction unit 116 obtains the influence component "main.tsx" to which the label "subject: software name" is added, the influence component "SOFTWARE 1" to which the label "object: software name" is added, and the influence component "file name restriction" to which the label "noun: path traversal countermeasure" is added, in step S1202.

According to the example of Fig. 4, both the influence components "main.tsx" and "SOFTWARE 1" related to the software name are included in a software configuration with a software configuration ID "SC001" corresponding to the unaddressed reason, and thus the component extraction unit 116 determines in step S1203 that both of the influence components are to be registered.

Fig. 13 is a flowchart illustrating an example of the vulnerability determination condition generation processing. The vulnerability determination condition generation unit 117 performs semantic analysis on the unaddressed reason included in the vulnerability investigation report information table 105 while referring to the influence component table 107 and the determination condition generation rule information table 108, thereby extracting a vulnerability determination condition (S1301). In step S1301, the determination condition generation rule indicated in the determination condition generation rule information table 108 is used as a pattern for the semantic analysis.

The vulnerability determination condition generation unit 117 extracts an influence component to which a label is added as the vulnerability determination condition in step S1301 when the label is added to an influence component extracted from an unaddressed reason and satisfies a determination condition generation rule, and the unaddressed reason includes an influence component to which the same label as an influence component label corresponding to the determination condition generation rule (in the determination condition generation rule information table 108) is added, for example.

The semantic analysis in step S1301 is an example of processing for extracting the vulnerability determination condition, and the vulnerability determination condition generation unit 117 may extract the vulnerability determination condition by another method. The vulnerability determination condition generation unit 117 may extract the vulnerability determination condition using a component-based syntactic analysis method, for example.

The vulnerability determination condition generation unit 117 checks consistency in the vulnerability determination condition extracted in step S1301 (S1302). For example, the component extraction unit 116 determines whether the vulnerability determination condition extracted in step S1301 is consistent with a vulnerability influence condition of a vulnerability ID corresponding to an influence component extracted as the vulnerability determination condition in the vulnerability information table 103.

The component extraction unit 116 performs the semantic analysis on the vulnerability influence condition, for example, and determines the consistency by comparing a result of the semantic analysis for the vulnerability influence condition with a result of semantic analysis for the vulnerability determination condition or a result of semantic analysis for an unaddressed reason having been an extraction source of the vulnerability determination condition (both are examples of semantic information).

Alternatively, a data label (an example of semantic information) indicating meaning of a vulnerability influence factor indicated in the vulnerability information table 103 may be added in advance according to an input from the user to the input device 205 or by using a machine learning method, for example. In this case, the vulnerability determination condition generation unit 117 compares the vulnerability determination condition with a data label assigned to the vulnerability influence factor (e.g., by determining consistency) to determine the consistency, for example.

The vulnerability determination condition generation unit 117 can improve extraction accuracy of the vulnerability determination condition by the processing in step S1302. Processing in step S1302 may be eliminated. When performing the processing in step S1302 and determining that the extracted vulnerability determination condition is not consistent in the processing in step S1302, the vulnerability determination condition generation unit 117 does not perform processing in step S1303 described later on the extracted vulnerability determination condition.

The vulnerability determination condition generation unit 117 registers information on the extracted vulnerability determination condition in the vulnerability determination condition table 109 (S1303), and ends the vulnerability determination condition generation processing. In step S1303, the vulnerability determination condition generation unit 117 issues a vulnerability determination condition ID, for example, and registers an influence component ID corresponding to a label having been a generation source of the vulnerability determination condition, a vulnerability ID of an investigation report including the unaddressed reason, a determination condition generation rule ID of a determination condition generation rule used to generate the vulnerability determination condition, and the vulnerability determination condition (a word of an influence component extracted as the vulnerability determination condition), in the vulnerability determination condition table 109.

The vulnerability determination condition generation unit 117 performs the processing in steps S1301 to S1303 on all combinations of unaddressed reasons included in the vulnerability investigation report information table 105 and determination condition generation rules included in the determination condition generation rule information table 108.

Hereinafter, a specific example of the processing in step S1301 will be described. As described above, the influence component "main.tsx" to which the label "subject: software name" is added, the influence component "SOFTWARE 1" to which the label "object: software name" is added, and the influence component "file name restriction" to which the label "noun: path traversal countermeasure" is added are extracted from the unaddressed reason illustrated in the example of FIG. 5.

Here, the example of Fig. 8 indicates a determination condition generation rule that is "when "subject: software name", "object: software name", and "noun: path traversal countermeasure" are included", and an influence component label that is "subject: software name". That is, an influence component label extracted from the unaddressed reason illustrated in the example of Fig. 5 includes an influence component that satisfies the determination condition generation rule and to which the influence component label is added. Thus, the vulnerability determination condition generation unit 117 extracts the influence component "main.tsx", to which the influence component label "subject: software name" is added, as a vulnerability determination condition in step S1301.

That is, the vulnerability determination condition ("main.tsx") is a component that determines presence or absence of an influence (that there is no influence) due to the vulnerability ("CVE-XXXX") on the software configuration ("SC001") to be investigated in the investigation report including an unaddressed reason having been a generation source of the influence component list ("AC002") corresponding to the vulnerability condition.

Fig. 14 is a flowchart illustrating an example of the vulnerability influence evaluation processing. The vulnerability investigation report registration processing in Fig. 11 is assumed to be completed before processing in step S1403 to be described later is started.

The input/output unit 111 acquires information on a software configuration to be evaluated for the vulnerability influence evaluation, the information being input by the user through the graphical user interface (GUI) or the like (S1401), for example. The software configuration information registration unit 114 registers the acquired information in the software configuration information table 104 (S1402).

The vulnerability influence evaluation unit 118 evaluates the vulnerability influence of the software configuration to be evaluated, using the vulnerability determination condition indicated in the vulnerability determination condition table 109 (S1403). For example, when determining that the software indicated by the vulnerability determination condition in the vulnerability determination condition table 109 is included in the software configuration to be evaluated, the vulnerability influence evaluation unit 118 evaluates vulnerability and determines that the vulnerability does not affect the software configuration, the vulnerability being indicated by the vulnerability ID corresponding to the vulnerability determination condition in the vulnerability determination condition table 109.

For example, when determining that the software configuration to be evaluated includes software of a version indicated in the vulnerability information table 103 and does not include software indicated by a vulnerability determination condition indicated in the vulnerability determination condition table 109, the vulnerability determination condition being related to a vulnerability ID corresponding to the software of the version in the vulnerability information table 103, the vulnerability influence evaluation unit 118 evaluates vulnerability indicated by the vulnerability ID and determines that the vulnerability affects the software configuration.

When the software configuration to be evaluated includes the vulnerability determination condition "main.tsx", for example, the vulnerability influence evaluation unit 118 evaluates the vulnerability of "CVE-XXXX" and determines that the vulnerability of "CVE-XXXX" does not affect the software configuration to be evaluated, as in a past investigation report.

Although the vulnerability influence evaluation unit 118 directly compares the software configuration to be evaluated with the vulnerability determination condition in the above example, the vulnerability influence evaluation unit 118 may perform vulnerability influence evaluation on the software configuration to be evaluated by using a past vulnerability influence evaluation result for a software configuration (also referred to below as a past software configuration) of a product (e.g., a product that is different only in version from a product corresponding to the software configuration to be evaluated) for which the vulnerability influence evaluation has been performed in the past, for example.

Specifically, the vulnerability influence evaluation unit 118 may perform the vulnerability influence evaluation by specifying a difference between the software configuration to be evaluated and the past software configuration and comparing only the difference with the vulnerability determination condition, for example.

For example, when the software configuration to be evaluated is different from the past software configuration only in a point that the past software configuration does not include "main.tsx" and the software configuration to be evaluated includes "main.tsx", the vulnerability influence evaluation unit 118 can evaluate the vulnerability of "CVE-XXXX" and determine that the vulnerability does not affect the software configuration to be evaluated by comparing "main.tsx" being the difference with the vulnerability determination condition "main.tsx".

Meanwhile, when the software configuration to be evaluated is different from the past software configuration only in a point that the past software configuration includes "main.tsx" and the software configuration to be evaluated does not include "main.tsx", for example, the vulnerability influence evaluation unit 118 can evaluate the vulnerability of "CVE-XXXX" and determine that the vulnerability affects the software configuration to be evaluated by comparing "main.tsx" being the difference with the vulnerability determination condition "main.tsx".

The vulnerability influence evaluation unit 118 can reduce the amount of calculation by performing the vulnerability influence evaluation by comparing the vulnerability determination condition only with the difference between the software configuration to be evaluated and the past software configuration.

The vulnerability influence evaluation information registration unit 115 registers a vulnerability influence evaluation result in the vulnerability influence evaluation table 110 (S1403), and ends the vulnerability influence evaluation processing. In step S1403, the vulnerability influence evaluation information registration unit 115 issues a vulnerability influence evaluation ID, for example, and registers the vulnerability influence evaluation ID, the vulnerability ID corresponding to the vulnerability determination condition used for the vulnerability influence evaluation, the software configuration ID to be evaluated, an influence determination result regarding the vulnerability in the vulnerability influence evaluation, and the vulnerability determination condition ID of the vulnerability determination condition, in the vulnerability influence evaluation table 110.

Processing in steps S1403 to S1404 is preferably performed for each vulnerability determination condition included in the vulnerability determination condition table 109. Alternatively, the processing in steps S1403 to S1404 may be performed only for the vulnerability ID or the vulnerability determination condition designated by the input/output unit 111 using the input device 205, for example.

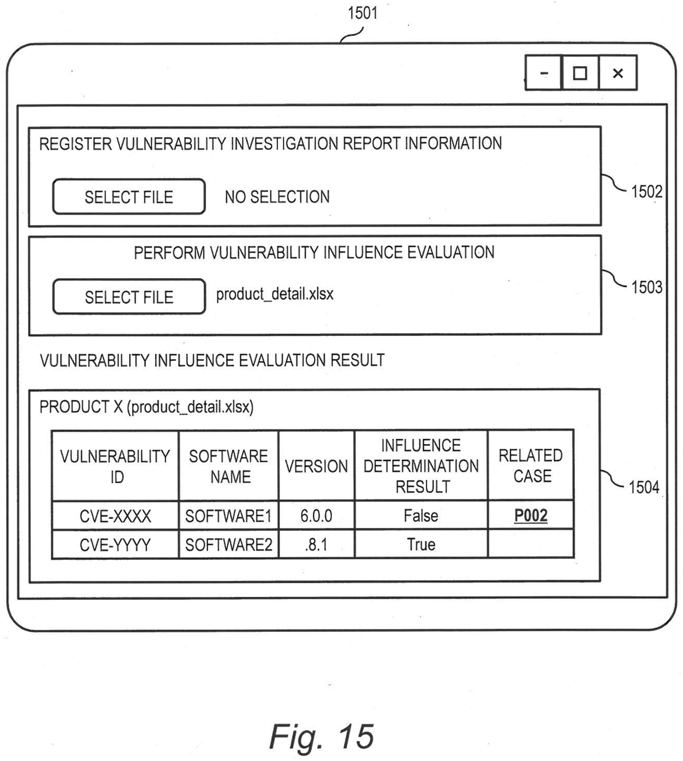

Fig. 15 is a diagram illustrating a screen configuration example of a vulnerability influence evaluation screen 1501. The vulnerability influence evaluation screen 1501 includes an investigation report registration region 1502, an evaluation target software configuration registration region 1503, and an evaluation result display region 1504, for example.

The input/output unit 111 displays the vulnerability influence evaluation screen 1501 on the output device 206 in steps S1101 and S1401. The investigation report registration region 1502 is for acquiring a file indicating the investigation report (information to be registered in the vulnerability investigation report information table 105) in step S1101. When the investigation report is selected in the investigation report registration region 1502, the processing in step S1102 is performed.

The evaluation target software configuration registration region 1503 is for acquiring a file indicating a software configuration to be evaluated (information to be registered in the software configuration information table 104) in step S1401. When the software configuration to be evaluated is selected in the evaluation target software configuration registration region 1503, the processing in step S1402 is performed.

After step S1404 ends, the input/output unit 111 displays the vulnerability influence evaluation screen 1501 on the output device 206. The evaluation result display region 1504 displays information regarding the vulnerability influence evaluation registered in step S1404. Specifically, the evaluation result display region 1504 displays a vulnerability ID, a software name included in a software configuration to be evaluated, a version of the software, an influence determination result for the software, and a related case, for example.

As the related case, information is displayed when an influence determination result is "False", the information being related to existing software configuration to be investigated (that is, a product) in the investigation report including an unaddressed reason that is an extraction source of an influence component corresponding to a vulnerability determination condition used for vulnerability influence evaluation, for example. When the related case is displayed as described above, the user can easily check validity and the like of the vulnerability influence evaluation with reference to the related case.

The evaluation result display region 1504 may further display the vulnerability determination condition used for the vulnerability influence evaluation. Alternatively, the evaluation result display region 1504 may further display the unaddressed reason together with the related case, the unaddressed reason being the extraction source of the influence component corresponding to the vulnerability determination condition used for vulnerability influence evaluation when the influence determination result is "False".

As described above, the vulnerability influence evaluation system according to the present embodiment extracts an influence component from an unaddressed reason in an investigation report, generates a vulnerability determination condition from the extracted influence component using a rule related to the influence component, and performs vulnerability influence evaluation on a software configuration to be evaluated using the vulnerability determination condition. Consequently, the vulnerability influence evaluation system can perform a more advanced vulnerability influence evaluation on a product.

As described above, the vulnerability influence evaluation system extracts the influence component from description of the unaddressed reason for vulnerability, and thus can perform influence evaluation using a complex causal relationship, the influence evaluation having failed to be performed by simple matching between software configuration information and vulnerability information.

In particular, the vulnerability influence evaluation system generates a vulnerability determination condition using a dependency relationship between pieces of software included in a product and an unaddressed reason regarding the dependency relationship between the pieces of software, and thus can perform vulnerability influence evaluation in consideration of a dependency relationship as described above.

Although the vulnerability influence evaluation system according to the present embodiment extracts an influence component from an unaddressed reason, a vulnerability determination condition may be generated using a target reason (a reason for necessity of addressing vulnerability of the software configuration to be investigated, that is, a reason why an adverse effect due to the vulnerability occurs) instead of the unaddressed reason. This configuration allows a software configuration satisfying the vulnerability determination condition to be evaluated as a software configuration to be affected by the vulnerability.

Although a product is generally operated by sufficiently analyzing an addressed reason and correcting or updating software to be affected by vulnerability indicated by the addressed reason, an unaddressed reason is generally not sufficiently analyzed in many cases. For this reason, the vulnerability influence evaluation system uses an unaddressed reason to generate a vulnerability determination condition, so that a highly accurate evaluation result, which cannot be obtained in a conventional vulnerability influence evaluation, can be easily obtained.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. A vulnerability influence evaluation system comprising:
a processor; and
a memory,
the memory being configured to hold:
an investigation report indicating a result of vulnerability influence evaluation on an existing software configuration including one or more pieces of software;
reference information indicating an influence component indicating a word related to vulnerability influence evaluation and a type of the influence component;
determination condition generation rule information indicating a determination condition generation rule based on the type and an influence component label; and
software configuration information indicating a software configuration to be evaluated that includes one or more pieces of software, and
the processor being configured to:
extract influence components indicated by the reference information from the investigation report;
add a label to corresponding one of the extracted influence components, the label including the type corresponding to the corresponding one of the extracted influence components in the reference information;
generate a vulnerability determination condition indicating an influence component corresponding to the influence component label among the extracted influence components when the label added to the corresponding one of the extracted influence components satisfies the determination condition generation rule and the added label includes the influence component label; and
perform the vulnerability influence evaluation on the software configuration to be evaluated based on the vulnerability determination condition.

2. The vulnerability influence evaluation system according to claim 1,
wherein the investigation report indicates a result of the vulnerability influence evaluation indicated, the result including an unaddressed reason indicating a reason of unnecessity of addressing vulnerability to be investigated for the existing software configuration, and
wherein the processor is configured to extract an influence component indicated by the reference information from the unaddressed reason.

3. The vulnerability influence evaluation system according to claim 2, wherein the unaddressed reason includes a reason related to a dependency relationship between pieces of software included in the existing software configuration.

4. The vulnerability influence evaluation system according to claim 1,
wherein the type indicated by the reference information includes a first type indicating information for identifying software,
wherein the influence component label indicates the first type, and
wherein the processor is configured to perform the vulnerability influence evaluation on the software configuration to be evaluated, based on whether software indicated by the influence component indicated by the vulnerability determination condition is included in the software configuration to be evaluated.

5. The vulnerability influence evaluation system according to claim 4,
wherein the software configuration information further indicates the existing software configuration, and
wherein the processor is configured to:
check consistency in an influence component based on whether the existing software configuration indicated by the software configuration information includes software indicated by the influence component to which a label including the first type is added; and
determine an influence component to be compared with the determination condition generation rule and an influence component to be used to generate the vulnerability determination condition based on a result of the consistency checked in the influence component.

6. The vulnerability influence evaluation system according to claim 1,
wherein the investigation report indicates a vulnerability influence condition for the existing software configuration to be affected by the vulnerability to be investigated in the investigation report,
wherein the memory is configured to hold semantic information indicating meaning of the vulnerability influence condition, and
wherein the processor is configured to:
perform semantic analysis on the investigation report;
check consistency in the vulnerability determination condition based on a comparison result between meaning of the vulnerability determination condition indicated by a result of the semantic analysis and the semantic information; and
determine a vulnerability determination condition used for vulnerability influence evaluation for the software configuration to be evaluated based on a result of the consistency checked in the vulnerability determination condition.

7. The vulnerability influence evaluation system according to claim 1,
wherein the investigation report includes natural language text related to vulnerability influence evaluation for the existing software configuration,
wherein the influence component label includes the type and a part of speech or a component of a sentence, and
wherein the processor is configured to:
perform morphological analysis on the text included in the investigation report by using an influence component indicated by the reference information;
extract the influence component from the text divided by the morphological analysis; and
add the label to the extracted influence component, the label including the type corresponding in the reference information and a part of speech or a component of a sentence indicated by a result of the morphological analysis of the extracted influence component.

8. The vulnerability influence evaluation system according to claim 1, wherein the processor is configured to generate data for displaying a screen for accepting registration of the investigation report.

9. The vulnerability influence evaluation system according to claim 1,
wherein the processor is configured to:
input information on a related case indicating the existing software configuration in an investigation report that is an extraction source of an influence component indicated by the vulnerability determination condition into a result of the vulnerability influence evaluation for the software configuration to be evaluated when the vulnerability influence evaluation determines that the software configuration to be evaluated does not satisfy the vulnerability determination condition; and
generate data for displaying a screen including a result of the vulnerability influence evaluation for the software configuration to be evaluated.

10. A vulnerability influence evaluation method by a vulnerability influence evaluation system,
the vulnerability influence evaluation system having a processor and a memory,
the memory being configured to hold:
an investigation report indicating a result of vulnerability influence evaluation on an existing software configuration including one or more pieces of software;
reference information indicating an influence component indicating a word related to vulnerability influence evaluation and a type of the influence component;
determination condition generation rule information indicating a determination condition generation rule based on the type and an influence component label; and
software configuration information indicating a software configuration to be evaluated that includes one or more pieces of software, and
the vulnerability influence evaluation method comprising:
extracting, by the processor, influence components indicated by the reference information from the investigation report;
adding, by the processor, a label to corresponding one of the extracted influence components, the label including the type corresponding to the corresponding one of the extracted influence components in the reference information;
generating, by the processor, a vulnerability determination condition indicating an influence component corresponding to the influence component label among the extracted influence components when the label added to the corresponding one of the extracted influence components satisfies the determination condition generation rule and the added label includes the influence component label; and
performing, by the processor, the vulnerability influence evaluation on the software configuration to be evaluated based on the vulnerability determination condition.
